Europäisches Patentamt

European Patent Office

Office européen des brevets

(11) Veröffentlichungsnummer: **0 576 919 A1**

# (12) EUROPÄISCHE PATENTANMELDUNG

(21) Anmeldenummer: **93109637.4**

(22) Anmeldetag: **16.06.93**

(51) Int. Cl.5: **H04L 25/30**, H04L 7/033

(30) Priorität: **30.06.92 DE 4221476**

(43) Veröffentlichungstag der Anmeldung:
**05.01.94 Patentblatt 94/01**

(84) Benannte Vertragsstaaten:
**DE FR GB IT SE**

(71) Anmelder: **SIEMENS AKTIENGESELLSCHAFT**
**Wittelsbacherplatz 2**
**D-80333 München(DE)**

(72) Erfinder: **Sedlmayr, Johannes**
**Iglingerstrasse 39**
**D-8912 Kaufering(DE)**

(54) **Verfahren und Anordnung zur Regeneration eines Binärsignals.**

(57) Bei einer analog arbeitenden Regenerationsanordnung für Binärsignale treten Qualitätseinbußen bei unterschiedlichen Signalamplituden, bei Bauteiletoleranzen und Offset-Verschiebungen auf.

Deshalb soll ein Verfahren zur Regeneration von Binärsignalen und eine hierzu geeignete Anordnung geschaffen werden.

Bei der Erfindung werden die abgetasteten Binärwerte (1,0) mit Hilfe eines Schwellwertes ermittelt und getrennten Integrationseinrichtungen (4, 7 und 6, 9) zugeführt. Einer weiteren Integrationseinrichtung (5, 8) werden die Abtastwerte (S) der Nulldurchgänge zugeführt, aus diesen wird auch ein Steuersignal (SS) für einen Oszillator (14) gewonnen. Durch Differenzbildung der durch die Integrationseinrichtungen gebildeten Mittelwerte (M1, M2, M3) mit den entsprechenden Abtastwerten ($S_1$, $S_N$, $S_0$) werden Differenzwerte (D1, D2 und D3) berechnet, aus deren Beträgen durch weitere Integration ein Gütekriterium (GK) und eine Störmeldung (SM) gewonnen wird.

FIG 2

Die Erfindung betrifft ein Verfahren zur Regeneration eines Binärsignals nach dem Oberbegriff des Patentanspruchs 1 und eine Anordnung zur Durchführung des Verfahrens nach dem Oberbegriff des unabhängigen Patentanspruchs.

Binäre Daten werden als bandbegrenzte Binärsignale übertragen. Empfangsseitig ist eine Regeneration des übertragenen Binärsignals erforderlich. Aus dem Binärsignal wird ein üblicherweise zur Abtastung verwendetes Taktsignal in einer Phasenregelschleife wiedergewonnen. Das Regelkriterium wird aus den Nulldurchgängen des empfangenen Binärsignals abgeleitet. Durch Exemplarstreuung der Bauelemente, beispielsweise durch temperaturbedingte Offset-Spannungen, wird eine optimale Auswertung des Signals verhindert. Ebenso verhindern unterschiedliche Amplituden des Empfangssignals, bedingt durch unterschiedliche Übertragungsbedingungen oder Exemplarstreuungen eines vorgeschalteten Demodulators, eine optimale Wiedergewinnung des ursprünglichen Binärsignals.

Es soll daher ein Verfahren zur Rückgewinnung des Taktsignals und zur optimalen Regeneration des Empfangssignals angegeben werden.

Außerdem sollen noch Kriterien gewonnen werden, die die Güte des empfangenen Binärsignals und Störsignale signalisieren.

Ein erfindungsgemäßes Verfahren ist im Patentanspruch 1 angegeben. Eine Anordnung zur Durchführung des Verfahrens ist in einem unabhängigen Anspruch angegeben.

Vorteilhafte Weiterbildungen der Erfindung sind den Unteransprüchen zu entnehmen.

Der besondere Vorteil der Erfindung besteht darin, daß eine rein digitale Verarbeitung des empfangenen Binärsignals erfolgt. Fehler durch Offset-Spannungen werden durch die digitale Verarbeitung ausgeglichen und ausgeregelt, so daß stets ein Abtasttakt ohne Phasenfehler erzeugt wird.

Durch die digitale Auswertung der Amplituden (in der Regel Spannungswerte) der Nulldurchgänge wird außerdem der Schwellwert zur Unterscheidung zwischen den zwei verschiedenen Abtastwerten des Signals angepaßt. Die Digitaltechnik ermöglicht außerdem große Zeitkonstanten, so daß das Verfahren auch bei einem durch starkes Rauschen gestörten Signal optimal arbeitet. Auch bei Unsymmetrien des empfangenen Binärsignals erfolgt eine optimale Regeneration.

Durch Vergleich mit den langfristigen Mittelwerten der abgetasteten Binärwerte können Kriterien für die Signalgüte und das Vorhandensein von Störsignalen gewonnen werden.

Eine Anordnung zur Durchführung des Verfahrens wird zweckmäßigerweise in integrierter Schaltkreistechnik realisiert. In den Schaltungsdetails sind zahlreiche Variationen möglich.

Ein Ausführungsbeispiel der Erfindung wird anhand von Figuren näher erläutert.

Es zeigen:

Fig. 1    ein Prinzipschaltbild,

Fig. 2    ein Blockschaltbild und

Fig. 3    ein Zeitdiagramm.

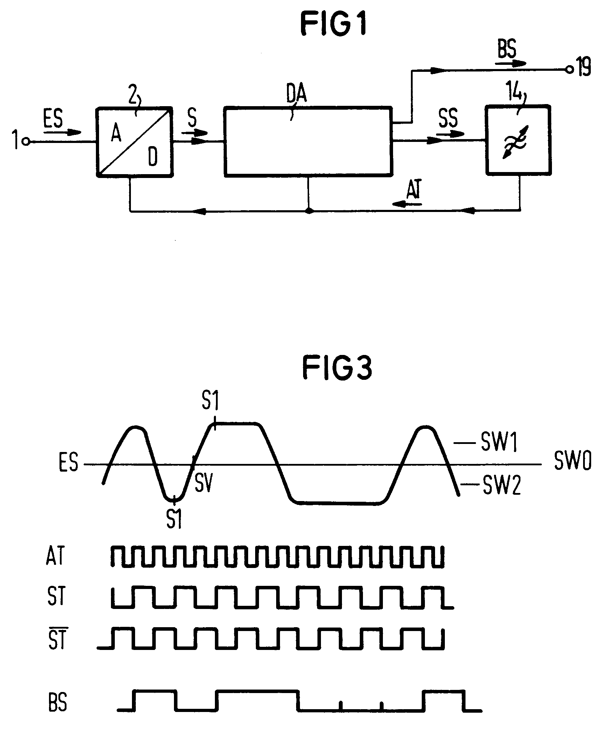

In Figur 1 ist ein Prinzipschaltbild der erfindungsgemäßen Anordnung dargestellt. Dem Signaleingang 1 eines A/D-Umsetzers 2 (Analog/Digital) wird ein empfangenes Binärsignal ES zugeführt und von diesem in einen digitalen Abtastwert S umgewandelt. Die Abtastwerte werden in einer digitalen Anordnung DA in ein optimal entzerrtes Binärsignal BS umgesetzt und am Datenausgang 19 abgegeben. Außerdem wird in der digitalen Anordnung DA ein Steuersignal SS erzeugt, daß einen Oszillator 14 steuert, der wiederum ein Abtasttaktsignal AT erzeugt, das dem A/D-Umsetzer 2 und der digitalen Anordnung DA zugeführt wird.

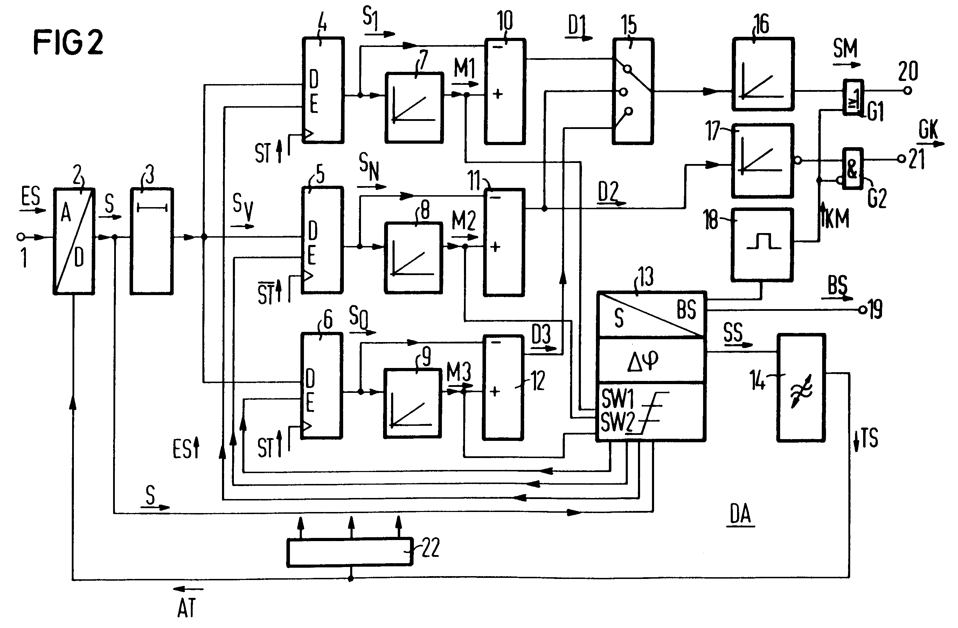

In Figur 2 ist die Anordnung ausführlicher in einem Blockschaltbild dargestellt. Die Anordnung enthält den A/D-Umsetzer 2, dessen Ausgang über ein Verzögerungsglied 3 mit den Eingängen dreier Integrationseinrichtungen 4, 7; 5, 8 und 6, 9 verbunden ist. Jede Integrationseinrichtung enthält einen Integrator 7, 8, 9 mit jeweils einem vorgeschalteten Register 4, 5, 6. Die Ausgänge der Integratoren sind mit einer Steuereinrichtung 13 verbunden. Außerdem sind die Ein- und Ausgänge der Integratoren jeweils mit einem Subtrahierer 10, 11, 12 verbunden. Der Ausgang des zweiten Subtrahierers 11 ist hierbei auf einen weiteren Integrator 17 geführt, an dessen Ausgang 21 ein Gütekriterium GK abgegeben wird. Die Ausgänge aller drei Subtrahierer sind über einen Multiplexer 15 mit einem weiteren Integrator 16 verbunden, dessen Ausgang über ein Gatter G1 auf einen Anschluß 20 geführt ist, an dem eine Störmeldung SM abgegeben wird. Eine an die Steuereinrichtung 13 angeschaltete Signalüberwachung 18 gibt bei Dauerlagen eine Kontrollmeldung KM ab. Diese ist über das erste Gatter G1 mit der Störmeldung und über ein zweites Gatter G2 mit dem Gütekriterium logisch verknüpft. Eine Taktversorgung 22 liefert weitere Betriebstakte für die Empfangsanordnung.

Das binäre Empfangssignal ES wird mit dem Abtasttaktsignal AT, das die doppelte Taktrate der empfangenen Daten aufweist, abgetastet und in digitale Abtastwerte S umgesetzt. Der Abtastwert S wird der Steuereinrichtung 13 zugeführt, die entscheidet, welchem Binärwert "1" oder "0" er zuzuordnen ist. Die Zuordnung erfolgt aufgrund des Mittelwertes M2, bzw. eines diesem entsprechenden Schwellwertes SW0. Außerdem erfolgt zur Bildung von Mittelwerten M1, M2, M3 die Zuordnung der Abtastwerte zu den drei Integrationseinrichtungen 4, 7; 5, 8; 6, 9 durch Zuordnungssignale ES über Enable-Eingänge E der Register 4 bis 6 oder zusätzlich durch geeignete Taktsignale. Handelt es sich um den ersten Binärwert 1, so wird er in das erste Register 4 eingeschrieben. Handelt es sich um den zweiten Binärwert "0" so wird er in das dritte Register R6 übernommen. Die Abtastwerte werden als verzögerte Abtastwerte $S_V$ mit dem späteren Abtasttakt -bezogen auf das abgetastete Empfangssignal - übernommen. Das Verzögerungsglied 3 hat lediglich die Aufgabe, der Steuereinrichtung genügend Zeit zur Verfügung zu stellen, um einen Vergleich mit dem Schwellwert SW0 durchführen zu können und eine Entscheidung zu treffen, ob es sich um einen der Binärwerte 0, 1 oder einen Nulldurchgang handelt.

Die Bits des binären Empfangssignals werden genau in der Mitte und um 180° dazu verschoben abgetastet. Die abgetastete Information wird in die Register 4 oder 6 übernommen. Die Abtastwerte $S_N$ der Nulldurchgänge werden in das Register 4 übernommen. Als Hilfe zur Zuordnung können auch zwei weitere Schwellwerte SW1 und SW2 verwendet werden, die jeweils ca. 1/2 Amplitude des Empfangssignals aufweisen. Dies wird noch genauer erläutert. Das Verzögerungsglied 3 kann als Register ausgeführt werden.

Die in die Register 4 bis 6 übernommenen Abtastwerte werden in den Integratoren 7 bis 9 aufsummiert. Am Ausgang der Integratoren liegen dann die Summen beziehungsweise - bei Fortlassen der niederwertigsten Binärstellen - die Mittelwerte M1 bis M3 an, die der Steuerung zugeführt werden. Dieser stehen damit der Mittelwerte M1 des ersten Binärwertes "1", der Mittelwert M3 des zweiten Binärwertes "0" und der Mittelwert M2 der Nulldurchgänge - genauer die der entsprechenden Abtastwerte $S_1$, $S_0$, $S_N$ - zur Verfügung. Hieraus kann sie die Schwellen SW1 und SW2 ermitteln, die beispielsweise in der Mitte zwischen den Mittelwerten M1 und M2 bzw. M2 und M3 liegen.

Aus dem Vergleich des aktuellen Abtastwertes $S_N$ mit dem zweiten Mittelwert M2 wird bei Abweichungen ein Steuersignal SS gewonnen, das über einen Tiefpaß den Oszillator 14 steuert. Die Abweichungen der positiven und der negativen Flankendurchgänge werden hierbei mit unterschiedlichem Vorzeichen bewertet, so daß einer Phasenabweichung zwischen dem empfangenen Ternärsignal TS und dem Abtasttaktsignal AT stets ein gleichgerichtetes Steuersignal SS entspricht.

Anhand von Figur 3 soll dies näher erläutert werden. In der obersten Zeile ist das binäre Empfangssignal ES dargestellt, das mit dem Abtasttaktsignal AT (positive Flanke) abgetastet wird. Die Daten werden mit einem aus dem Abtasttakt abgeleiteten Steuertakt ST übernommen und die Nulldurchgänge mit dem hierzu invertierten Steuertakt $\overline{ST}$, die beide die halbe Taktfrequenz des Abtasttaktes AT aufweisen.

In die zweite Integrationseinrichtung 5, 8 sollen nur die Abtastwerte $S_N$, die Nulldurchgängen entsprechen, übernommen werden. Hierzu werden von der Steuereinrichtung drei aufeinanderfolgende Abtastwerte S1, S2 und S3 bewertet. Nur wenn der erste dieser drei Abtastwerte S1 und der dritte Abtastwert S3 unterschiedlichen Extremwerten, den Binärwerten "1" und "0" entsprechen, dann liegt der mittlere Abtastwert S2 im Bereich eines Nulldurchgangs und wird folglich auch in die zweite Integrationseinrichtung 5, 8 übernommen. Durch die Schwellwerte SW1 und SW2 kann dieses Verfahren verbessert werden, es genügt aber prinzipiell die Feststellung, daß der erste und der dritte Abtastwert S1 und S3 auf verschiedenen "Seiten" des Schwellwertes SW0 liegen.

Die Mittelwertbildung von M2 erfolgt also nur von den Abtastwerden der Nulldurchgänge. Aus den vorstehenden Betrachtungen kann gefolgert werden, daß der zweite Mittelwert M2 bei einer vereinfachten Ausführung auch durch Mittelung der beiden Binärwerten "1" und "0" zugeordneten Mittelwerten M1 und M3 gewonnen werden kann. Bei unsymmetrischen Binärsignalen, die Binärwerte 1 und 0 weisen unterschiedliche Amplituden auf, ist dann aber die Abtastung nicht mehr optimal. Das Steuersignal SS kann natürlich auch aus einer Differenz D2 am Ausgang des zweiten Subtrahierers 11 gewonnen werden, statt in der Steuereinrichtung erzeugt zu werden.

Bei der positiven Flanke wird eine Abweichung eines Abtastwertes $S_N$ vom Mittelwert M2 direkt als Steuersignal SS verwendet, bzw. das Vorzeichen der Abweichung; bei einer negativen Flanke wird das Vorzeichen der Abweichung invertiert.

Dem Oszillator 14 kann auch noch ein digitaler Tiefpaß vorgeschaltet sein.

In der zweiten Integrationsvorrichtung 5, 8 wird nicht nur der Mittelwert M2 für die Nulldurchgänge bestimmt, sie ist auch vorteilhaft für die Gewinnung des Gütekriteriums GK. Zunächst wird die Differenz D2 zwischen dem zweiten Mittelwert M2 und dem aktuellen Abtastwert $S_N$ eines Nulldurchganges gebildet. Diese Abweichungen entsprechen den zeitlichen Verzerrungen der Nulldurchgänge, auch als Jitter bezeichnet. Diese Differenzen werden dem weiteren Integrator 17 zugeführt und unter Fortlassung des Vorzeichens summiert. Die Differenz D2 gibt hierbei die Abweichung des Abtastwertes vom Idealwert an. Übersteigt die Summe der Differenzen D2 bei einer vorgegebenen Anzahl von Abtastwerten einen Summenwert, so kann ein Signal ausgegeben werden, das auf eine verminderte Güte des empfangenen Signals hinweist. Liegt die Summe jedoch unterhalb dieses Schwellwertes, so kann ein hierzu antivalentes Gütekriterium GK angezeigt werden. Ebenso besteht die Möglichkeit, verschiedene Gütestufen zu signalisieren. Selbstverständlich kann der Differenzwert D2 auch vorher mit einem mittleren Schwellwert verglichen werden und das Ergebnis im Integrator 17 addiert oder subtrahiert werden.

Ermittelt man die Maximalabweichung aller Nulldurchgänge $S_N$ innerhalb einer Meßzeit, kann daraus der maximale Jitter des maximalen Empfangssignals ES ermittelt werden.

Die Zuverlässigkeit des Gütekriteriums GK steigt mit der Anzahl der bewerteten Abtastwerte $S_N$ bzw. der Differenzwerte D2. Die Erkennung eines Störsignals soll jedoch häufig innerhalb kürzerer Zeit erfolgen. Zu diesem Zweck werden die Differenzwerte D1 und D3 in derselben Weise in der ersten Integrationseinrichtung 4, 7 und der dritten Integrationseinrichtung 6, 9 gebildet und über den Multiplexer 15 dem vierten Integrator 16 zugeführt. Hierdurch kann die Integrationszeit wesentlich verringert werden. Die Erkennungszeit für einen Störer liegt bei ca. 200 bis 400 Abtastwerten. Wird eine Störung erkannt, so können die Integratoren gegen eine Einspeicherung weiterer Abtastwerte gesperrt werden.

Die Signalüberwachung 18 gibt dann eine Kontrollmeldung KM ab, wenn keine Schrittumschläge erfolgen. Dies kann aufgrund eines Störers oder eines fehlenden Eingangssignals erfolgen.

**Patentansprüche**

1.  Verfahren zur Regeneration eines Binärsignals (ES),
    **dadurch gekennzeichnet,**
    daß das empfangene Binärsignal (ES) mit der doppelten Datenrate abgetastet und in digitale Abtastwerte (S) umgesetzt wird,
    daß Mittelwerte (M1, M3) aus den Binärwerten (1, 0) entsprechenden Abtastwerten ($S_1$, $S_0$) ermittelt werden,
    daß ein weiterer zweiter Mittelwert (M2) aus den Nulldurchgängen entsprechenden Abtastwerten ($S_N$) gebildet wird,
    daß eine Zuordnung der Abtastwerte ($S_1$, $S_0$) zu den Binärwerten ($S_1$, $S_0$) aufgrund eines Vergleichs mit dem als Schwellwert (SW0) dienenden zweiten Mittelwert erfolgt und
    daß aus den Abtastwerten ($S_N$) der Nulldurchgänge ein Steuersignal (SS) zur Steuerung des Abtasttaktsignals (AT) ermittelt wird.

2.  Verfahren nach Anspruch 1,
    **dadurch gekennzeichnet,**
    daß das Steuersignal (SS) durch Bildung der Differenz der Abtastwerte ($S_N$) der Nulldurchgänge unter Berücksichtigung der Richtung der Nulldurchgänge und des zweiten Mittelwertes (M2) erfolgt.

3.  Verfahren nach Anspruch 1 oder 2,
    **dadurch gekennzeichnet,**
    daß zwei weitere Schwellwerte (SW1, SW2) aus den Mittelwerten (M1, M3) der binären Abtastwerte ($S_1$, $S_0$) ermittelt werden, die zur Auswahl Abtastwerten ($S_1$, $S_N$, $S_0$) dienen, die zur Bildung von Mittelwerten (M1, M2, M3) beitragen.

4.  Verfahren nach Anspruch 3,
    **dadurch gekennzeichnet,**
    daß zur Bildung des Steuersignals (SS) nur dann die Abtastwerte ($S_N$) der Nulldurchgänge verwendet werden, wenn der vorhergehende Abtastwert (S1) und der nachfolgende Abtastwert (S3) betragsmäßig die weiteren Schwellwerte (SW1, SW2) überschreitet.

5.  Verfahren nach einem der vorhergehenden Ansprüche,
    **dadurch gekennzeichnet,**
    daß aus den Abweichungen zwischen dem zweiten Mittelwert (M2) und den Abtastwerten ($S_N$) der Nulldurchgänge zweite Differenzwerte (D2) gebildet werden,
    daß diese Differenzwerte (D2) betragsmäßig integriert werden und
    daß am Ende einer Integrationsperiode die Summe als Gütekriterium (GK) signalisiert wird.

6.  Verfahren nach einem der vorhergehenden Ansprüche,
    **dadurch gekennzeichnet,**
    daß aus den Abweichungen zwischen dem zweiten Mittelwert (M2) und den Abtastwerten ($S_N$) der Nulldurchgänge zweite Differenzwerte (D2) gebildet werden und daß von diesen Differenzwerten (D2) betragsmäßig die Maximalabweichung vom zweiten Mittelwert (M2) innerhalb einer Meßzeit ermittelt wird und daraus der Jitter des Empfangssignals (ES) abgeleitet wird.

7.  Verfahren nach einem der vorhergehenden Ansprüche,
    **dadurch gekennzeichnet,**
    daß zusätzlich die Differenzwerte (D1, D3) zwischen den Binärwerten (1, 0) entsprechenden Abtastwerten ($S_1$, $S_0$) und den hieraus gewonnenen ersten und dritten Mittelwerten (M1, M3) gebildet werden,
    daß die Beträge aller Differenzwerte (D1, D2, D3) integriert werden und
    daß am Ende einer Integrationsperiode die Summe aller Differenzwerte (D1, D2, D3) der Summenwerte als Störmeldung (SM) signalisiert wird.

8. Verfahren nach Anspruch 5 oder 7,
   **dadurch gekennzeichnet,**
   daß jeweils nur bei Unter- oder Überschreiten eines vorgegebenen Summenwertes ein Gütekriterium (GK) bzw. eine Störmeldung (SM) signalisiert wird.

9. Verfahren nach einem der vorhergehenden Ansprüche,
   **dadurch gekennzeichnet,**
   daß das empfangene Binärsignal (ES) oder das ausgehende Binärsignal (BS) auf Dauerlagen hin überwacht wird.

10. Anordnung zur Regeneration eines Ternärsignals (TS),
    **dadurch gekennzeichnet,**
    daß ein A/D-Umsetzer (2) vorgesehen ist, dessen Signaleingang (1) das empfangene Binärsignal (ES) zugeführt wird und mit einem Abtasttaktsignal (AT) abgetastet wird,
    daß der Ausgang des A/D-Umsetzers (2) über ein Verzögerungsglied (3) auf die Dateneingänge dreier Integrationseinrichtungen (4, 7; 5, 8; 6, 9) geführt ist, daß eine Steuereinrichtung (13) vorgesehen ist, der die Abtastwerte (S) vom Ausgang des A/D-Umsetzers (2) zugeführt werden und deren weiteren Eingänge mit den Ausgängen der Integrationseinrichtungen (4, 10; 5, 11; 8, 12) verbunden sind,
    daß die Steuereinrichtung (13) Mittel zum Vergleich der Amplitude eines Abtastwertes (S) mit einem dem Mittelwert (M2) der Nulldurchgänge Schwellwert (SW0) aufweist, daß die Steuereinrichtung (13) Mittel zur Erzeugung von Zuordnungssignalen (ES) aufweist, die jeweils einen verzögerten Abtastwert ($S_V$) eine der Integrationseinrichtungen (4, 7; 5, 8; 6, 9) zuordnen und
    daß die Steuereinrichtung (13) Mittel aufweist, um aus den Abtastwerten ($S_N$) der Nulldurchgänge ein Steuersignal (SS) für einen Oszillator (14) zu ermitteln, der das Abtasttaktsignal (AT) erzeugt.

11. Anordnung nach Anspruch 7,
    **dadurch gekennzeichnet,**
    daß ein zweiter Subtrahierer (11) vorgesehen ist, dessen Eingängen der Abtastwert ($S_N$) eines Nulldurchgangs- und der von der zweiten Integrationseinrichtung (5, 8) errechnete zweite Mittelwert (M2) zugeführt wird, so daß ein zweiter Differenzwert (D2) gebildet wird, und
    daß ein weiterer Integrator (17) vorgesehen ist, dem diese zweiten Differenzwerte (D2) zur Ermittlung eines Gütekriteriums (GK) zugeführt werden.

12. Anordnung nach Anspruch 8,
    **dadurch gekennzeichnet,**
    daß weitere Subtrahierer (10, 12) vorgesehen sind, die entsprechende Differenzwerte (D1, D3) für die Binärwerte (1, 0) ermitteln, und
    daß ein vierter Integrator (15) vorgesehen ist, dem alle Differenzwerte (D1, D2, D3) zur Ermittlung einer Störmeldung (SM) zugeführt werden.

13. Anordnung nach Anspruch 8 oder 9,
    **dadurch gekennzeichnet,**
    daß eine Signalüberwachung (18) vorgesehen ist, die das Vorhandensein von Dauerlagen des empfangenen Binärsignals (ES) oder des ausgegebenen Binärsignals (BS) überprüft.

14. Anordnung nach Anspruch 10,
    **dadurch gekennzeichnet,**
    daß logische Verknüpfungsglieder (G1, G2) vorgesehen sind, die ein von der Signalüberwachung (18) abgegebenes Ausgangssignal (KM) mit der Störmeldung (SM) oder/und dem Gütekriterium (GK) verknüpfen.

# FIG 1

# FIG 3

FIG2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 467 306 (TOKYO ELECTRIC)<br>* Zusammenfassung *<br>* Spalte 7, Zeile 39 - Spalte 8, Zeile 53 *<br>* Spalte 9, Zeile 46 - Zeile 56 *<br>* Spalte 11, Zeile 27 - Zeile 38 *<br>* Abbildungen 10-16 *<br>--- | 1-14 | H04L25/30<br>H04L7/033 |
| A | EP-A-0 079 107 (PHILIPS)<br>* Zusammenfassung *<br>* Seite 7, Zeile 30 - Seite 8, Zeile 17 *<br>* Seite 8, Zeile 26 - Seite 9, Zeile 16 *<br>* Abbildungen 4-7 *<br>--- | 1-14 | |
| A | EP-A-0 328 266 (NORTHERN TELECOM)<br>* Zusammenfassung *<br>* Spalte 4, Zeile 54 - Spalte 6, Zeile 49 *<br>* Abbildungen 3,4 * | 1-14 | |
| | ----- | | **RECHERCHIERTE SACHGEBIETE (Int. Cl.5 )**<br><br>H04L |

Der vorliegende Recherchenbericht wurde für alle Patentansprüche erstellt

| Recherchenort | Abschlußdatum der Recherche | Prüfer |
|---|---|---|
| DEN HAAG | 07 OKTOBER 1993 | GHIGLIOTTI L. |